# FASCICULE DE BREVET EUROPEEN

(11) **EP 2 030 821 B1**
(45) Date de publication et mention de la délivrance du brevet: **01.04.2015**
(21) Numéro de dépôt: 08163592.2
(22) Date de dépôt: 03.09.2008
(51) Int. Cl.: B60J 5/12, B60J 5/10

(54) **Ouvrant pour véhicule automobile**
Öffnungselement für Kraftfahrzeug
Door for automobile

(30) Priorité: 03.09.2007 FR 0757319
(43) Date de publication de la demande: 04.03.2009
(73) Titulaire: Compagnie Plastic Omnium, 69007 Lyon (FR)
(72) Inventeur: Andre, Gérald, 01500, Amberieu en Bugey (FR); Delwal, Fabien, 01320, Chalamont (FR); Barral, Denis, 38390, Montalieu Vercieu (FR); Fillon, Jérôme, 43000, Le Puy en Velay (FR); Cheron, Hugues, 01800, Meximieux (FR)
(74) Mandataire: Potdevin, Emmanuel Eric

(56) Documents cités:
- EP-A- 1 764 248
- WO-A-2005/042287
- DE-A1- 19 907 391
- FR-A- 2 731 658
- FR-A- 2 828 838
- JP-A- 60 240 519

## Description

La présente invention concerne les ouvrants d'un véhicule automobile.

Elle s'applique en particulier, mais non exclusivement, aux véhicules équipés de barres de toit longitudinales, par exemple de type monospace ou break.

On connaît du document WO2005/042287 un ensemble arrière de premier et second ouvrants pour véhicule automobile comprenant respectivement des premier et second hayons. Dans cet ensemble, le second ouvrant porte le premier hayon. Par hayon, on comprendra un élément situé en arrière du pavillon ou du plancher du véhicule automobile, libérant un accès à l'intérieur du véhicule automobile en s'ouvrant en direction de la partie supérieure du véhicule.

Le premier ouvrant comprend des charnières, fixées en partie haute du second ouvrant et dont l'axe principal de rotation est parallèle à une direction transversale du véhicule. Ces charnières sont fixés au premier hayon et au second ouvrant et forment des moyens d'articulation du premier hayon par rapport au second ouvrant. Ces charnières permettent la rotation du hayon, par rapport au second ouvrant, autour d'un premier axe principal de rotation des moyens d'articulation.

Le premier hayon est mobile entre une position d'ouverture dans laquelle il libère, au moins en partie, un accès à l'intérieur du véhicule et une position de fermeture dans laquelle il obture cet accès. Cet accès est délimité par une ouverture ménagée dans le second ouvrant.

On souhaite, pour des raisons pratiques, que cet accès soit le plus grand possible.

Bien que plus petit que le second hayon, le premier hayon présente des dimensions relativement importantes de façon à ce que l'accès soit relativement grand. Ces dimensions importantes engendrent, lors de l'ouverture et de la fermeture du premier hayon, un encombrement important selon la direction longitudinale du véhicule du fait, d'une part, de la trajectoire en rotation du premier hayon par rapport à la caisse du véhicule et, d'autre part, du prolongement du véhicule formé par le premier hayon dans sa position d'ouverture. Cet encombrement longitudinal est particulièrement pénalisant lorsque le premier hayon est en regard et à proximité d'une paroi ou d'un autre véhicule.

D'autres ensembles arrières sont également divulgués par les documents FR2 828 838 et FR 2 731 658.

L'invention a pour but de fournir un ensemble dans lequel le premier hayon présente un encombrement longitudinal aussi faible que possible tout en conservant un accès le plus grand possible.

A cet effet, l'invention a pour objet un ensemble de premier et second ouvrants arrières pour véhicule automobile, les premier et second ouvrants comprenant respectivement des premier et second hayons, le second ouvrant portant le premier hayon, ensemble dans lequel le premier ouvrant comprend des moyens d'articulation du premier hayon par rapport à une caisse du véhicule, fixés au premier hayon, le premier hayon étant mobile en rotation, par rapport à la caisse, autour d'un axe principal de rotation des moyens d'articulation, l'axe principal se déplaçant dans au moins une glissière de guidage de l'axe principal en translation par rapport à la caisse, selon une direction sensiblement parallèle à la direction longitudinale du véhicule entre :
- une position d'ouverture correspondant à une position d'ouverture du premier hayon dans laquelle le hayon libère, au moins en partie, un accès à l'intérieur du véhicule et est, au moins en partie, superposé sur un pavillon du véhicule, et
- une position de fermeture correspondant à une position de fermeture du premier hayon dans laquelle le premier hayon obture l'accès à l'intérieur du véhicule.

Le premier hayon présente à l'état ouvert un encombrement longitudinal relativement faible quelle que soit sa taille.

En effet, l'axe principal de rotation étant guidé en translation selon une direction sensiblement parallèle à la direction longitudinale du véhicule, le premier hayon présente une position d'ouverture dans laquelle il est au moins en partie superposé sur le toit du véhicule. Ainsi la dimension, selon la direction longitudinale du véhicule, du prolongement formé par le premier hayon dans sa position d'ouverture est inférieur à la dimension du premier hayon lui-même, selon la direction longitudinale, lorsque celui-ci est dans sa position d'ouverture. Ainsi, le premier hayon présente un encombrement dans sa position d'ouverture, dit encombrement statique, relativement faible.

De plus, la combinaison de la rotation et de la translation du premier hayon par rapport au second ouvrant permet de modifier la trajectoire du premier hayon. L'ensemble selon l'invention permet d'effectuer la rotation du premier hayon simultanément avec sa translation vers l'avant du véhicule si bien que l'encombrement longitudinal lié à la trajectoire, dit encombrement cinématique, est également relativement réduit.

En outre, le premier hayon présente un encombrement vertical relativement faible sans pour autant gêner l'utilisateur dans la position d'ouverture. En effet, comme le premier hayon est au moins en partie superposé au pavillon du véhicule dans la position d'ouverture, il n'est pas nécessaire que le premier hayon s'étende à une hauteur élevée pour ne pas gêner l'utilisateur. En effet, le premier hayon s'étend à une hauteur relativement basse, de préférence à proximité du pavillon du véhicule, de façon à réduire l'encombrement vertical autant que faire se peut, et ce sans limiter la hauteur de passage sous l'ouvrant.

Un autre avantage de l'ensemble selon l'invention est de permettre une ouverture et une fermeture plus rapides du premier hayon. En effet, la combinaison de la rotation et de la translation du premier hayon par rapport à la caisse engendre une cinématique présentant une course plus courte que la course d'une cinématique classique dans laquelle le premier hayon est uniquement mobile en rotation par rapport au second ouvrant. Ceci permet également un dégagement plus rapide de la partie utile du coffre.

Avantageusement, l'accès libéré par le premier hayon dans sa position d'ouverture est délimité par une ouverture ménagée dans le second ouvrant.

Selon une caractéristique optionnelle de l'ensemble selon l'invention, les moyens d'articulation du premier hayon par rapport à la caisse étant des premiers moyens d'articulation, le premier ouvrant comprend des seconds moyens d'articulation du premier hayon et du second ouvrant, entre eux, fixés au premier hayon et au second ouvrant, les seconds moyens d'articulation étant mobiles en rotation, par rapport au premier hayon et au second ouvrant, respectivement autour de premier et second axes secondaires de rotation des seconds moyens d'articulation.

Les seconds moyens d'articulation permettent d'imposer une trajectoire au premier hayon lors de son ouverture et sa fermeture. Ces seconds moyens d'articulation présentent des caractéristiques géométriques et cinématiques pouvant être modifiées en fonction de la géométrie spécifique du véhicule. Par exemple, ces seconds moyens d'articulation sont des équilibreurs pneumatiques ou une ou plusieurs biellettes rigides.

Dans le cas d'une biellette rigide, les caractéristiques géométriques permettant d'adapter le hayon à différents types de véhicules comprennent notamment la distance entre les axes secondaires de rotation ou la forme de la biellette.

Selon une caractéristique optionnelle de l'ensemble selon l'invention, l'ensemble comprend des moyens motorisés aptes à générer un couple autour du second axe secondaire de rotation des seconds moyens d'articulation.

Dans un mode de réalisation de l'ensemble selon l'invention, les moyens motorisés comprennent des moyens de transmission du couple au second axe secondaire de rotation.

Dans un autre mode de réalisation de l'ensemble selon l'invention, les moyens motorisés comprennent des moyens de déplacement en translation, par exemple des moyens de traction de l'axe principal de rotation. Ces moyens peuvent alors être intégrés aux barres de toit.

Optionnellement, l'accès libéré par le premier hayon étant un premier accès et l'axe principal de rotation du premier hayon étant un premier axe principal, le second hayon est mobile en rotation, par rapport à la caisse du véhicule, autour d'un second axe principal de rotation, fixe par rapport à la caisse du véhicule, entre une position d'ouverture dans laquelle il libère, au moins en partie un second accès à l'intérieur du véhicule délimité par une ouverture ménagée dans la caisse, et une position de fermeture dans laquelle il obture le second accès à l'intérieur du véhicule.

Un tel ensemble permet à un utilisateur d'accéder à l'intérieur du véhicule selon au moins deux modes d'ouverture de l'ensemble d'ouvrants. Dans un premier mode, l'utilisateur déplace le premier hayon jusque dans sa position d'ouverture ce qui libère le premier accès délimité par l'ouverture ménagée dans le second ouvrant. Dans un second mode, l'utilisateur déplace le second hayon jusque dans sa position d'ouverture ce qui libère le second accès délimité par l'ouverture ménagée dans la caisse. Généralement, l'ouverture du premier mode est de taille plus petite que l'ouverture du second mode.

En outre, dans un tel ensemble, l'utilisateur conserve la possibilité d'accéder à l'intérieur du véhicule en toutes circonstances. En effet, dans certains cas, le premier hayon ne peut être ouvert, par exemple, en raison d'un encombrement du pavillon interdisant toute superposition du premier hayon sur le pavillon. Dans ces cas, le second axe principal de rotation étant fixe par rapport à la caisse du véhicule, le second hayon peut être utilisé.

Avantageusement au moins une portion de la glissière de guidage est ménagée dans une barre de toit du véhicule.

Ainsi, un tel ensemble ne nécessite pas d'apporter de modifications structurelles importantes au véhicule, en particulier à la caisse. En effet, la glissière est ménagée dans la barre de toit du véhicule, ce qui permet de proposer à l'utilisateur plusieurs modèles de véhicules, comprenant ou non l'ensemble selon l'invention, en aménageant les barres de toit et cela sans modifier la caisse d'un modèle à l'autre d'un même véhicule.

En outre, l'aménagement des barres de toit n'étant pas très important, l'aménagement peut être systématique sans entraîner de surcoût significatif du véhicule si bien qu'il n'est pas toujours nécessaire de différencier les barres de toit entre les modèles comprenant ou non l'ensemble selon l'invention.

Par ailleurs, la caisse ne devant pas être différenciée selon les modèles, le véhicule est moins coûteux.

De plus, les barres de toit assurent alors une double fonction de support de charge et de guidage en translation de l'axe principal de rotation du premier hayon.

Selon une caractéristique optionnelle de l'ensemble selon l'invention, la glissière comprend:
- une portion solidaire rigidement de la caisse du véhicule, et
- une portion portée par le second ouvrant.

L'invention a pour autre objet un véhicule automobile, caractérisé en ce qu'il comprend un ensemble tel que défini ci-dessus.

L'invention a également pour objet un kit selon la revendication 11.

Avantageusement, le kit comprend au moins une barre de toit formant la glissière ou l'un des glissières.

L'invention sera mieux comprise à la lecture de la description qui va suivre, donnée uniquement à titre d'exemple non limitatif et faite en se référant aux dessins dans lesquels :
- la figure 1 est une vue partielle en perspective d'un véhicule selon l'invention comprenant un ensemble d'ouvrants selon un premier mode de réalisation de l'invention comprenant des premier et second hayons ;
- la figure 2 est une vue agrandie de moyens d'articulation de l'ensemble du véhicule de la figure 1 ;
- la figure 3 est une vue de la figure 1 dans laquelle le premier hayon est dans une position d'ouverture ;
- la figure 4 est une vue agrandie des moyens d'articulation de la figure 3 ;
- la figure 5 est une vue de la figure 1 dans laquelle le second hayon est dans une position d'ouverture ;
- la figure 6 est une vue agrandie des moyens d'articulation de la figure 5 ;
- la figure 7 est une vue en coupe des moyens d'articulation de l'ensemble de la figure 1 ;
- les figures 8 et 9 sont des vues en perspective d'un organe d'articulation et d'une barre de toit selon l'invention ;
- la figure 10 est une vue de la barre de toit des figures 8 et 9 ;
- la figure 11 est une vue de l'organe d'articulation des figures 8 et 9 ;
- la figure 12 est une vue partielle de côté d'un véhicule automobile selon l'invention comprenant un ensemble selon un deuxième mode de réalisation de l'invention;
- la figure 13 est une vue de la figure 12 dans laquelle le premier hayon est dans une position intermédiaire ;
- la figure 14 est une vue de la figure 12 dans laquelle le premier hayon est dans une position d'ouverture ;
- la figure 15 est une vue de la figure 12 dans laquelle le second hayon est dans une position intermédiaire ;
- la figure 16 est une vue de la figure 12 dans laquelle le second hayon est dans une position d'ouverture.

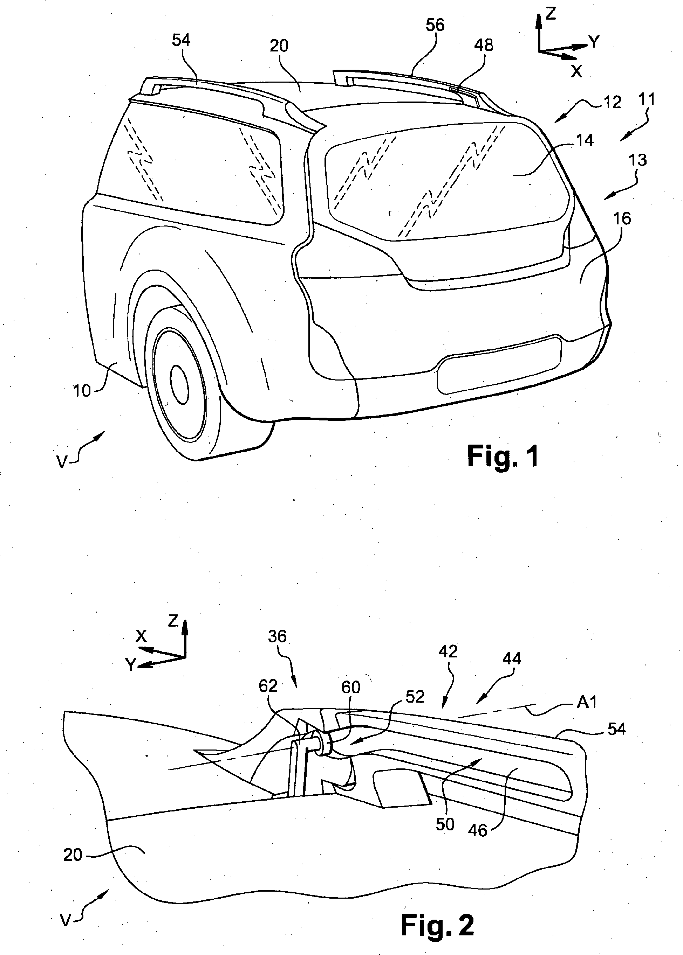

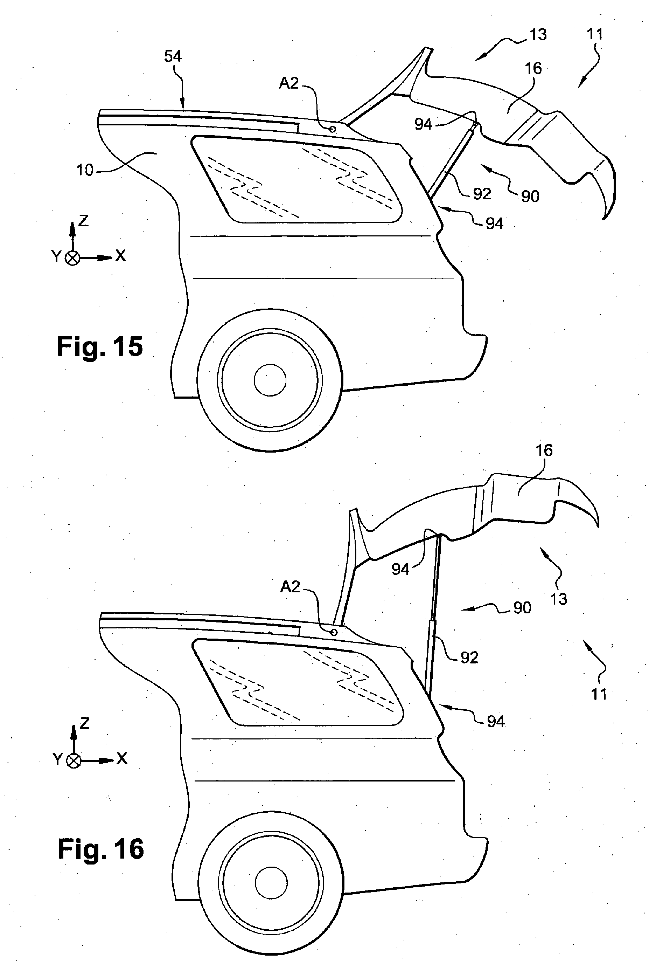

Sur les figures 1 à 16, on a représenté des axes X, Y, Z orthogonaux entre eux correspondant aux orientations habituelles longitudinale X, transversale Y et verticale Z d'un véhicule. L'axe longitudinal est orienté de l'avant vers l'arrière du véhicule.

On a représenté sur les figures 1 à 6 un véhicule automobile selon l'invention et désigné par la référence générale V.

Le véhicule V est, dans l'exemple représenté, un véhicule de type break, comprenant une caisse en blanc 10. Le véhicule V comprend également un ensemble 11 comprenant des premier et second ouvrants arrières 12, 13 comprenant respectivement des premier et second hayons 14, 16. Chaque premier et second hayon 14, 16 forme respectivement une première et seconde partie du hayon arrière du véhicule. Le premier hayon 14 est porté par le second ouvrant 13.

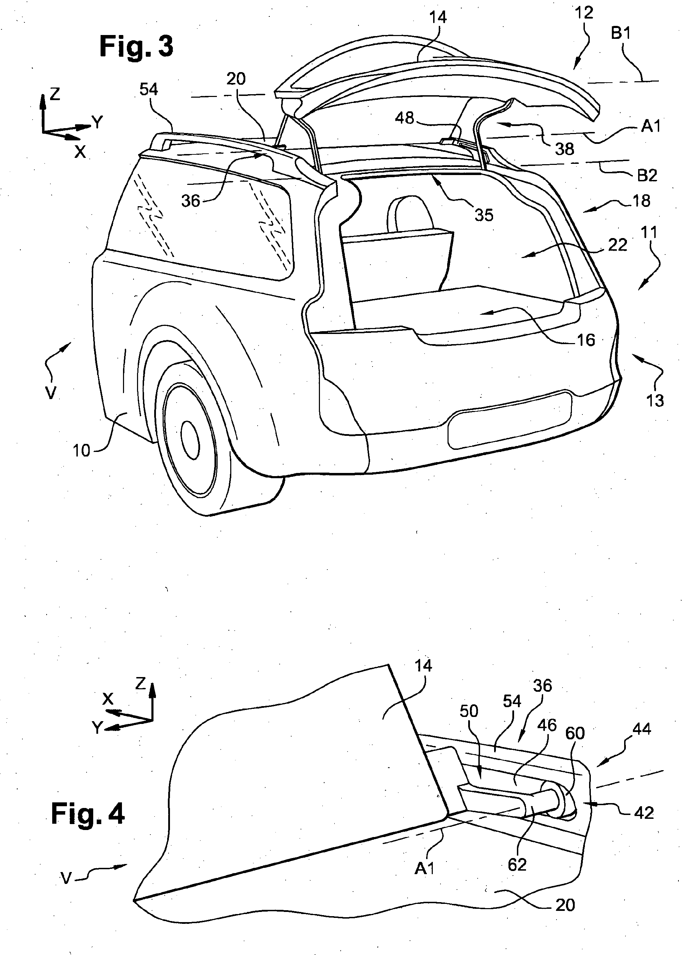

Comme représenté sur les figures 1 à 4, le premier hayon 14 est mobile entre :
- une position d'ouverture dans laquelle il libère, au moins en partie, un premier accès 18 à l'intérieur du véhicule et est, au moins en partie, superposé sur un pavillon 20 du véhicule (figures 3 et 4), et
- une position de fermeture dans laquelle il obture le premier accès 18 à l'intérieur du véhicule (figures 1 et 2).

Le premier accès 18 libéré par le premier hayon 14 dans sa position d'ouverture est délimité par une ouverture 22 ménagée dans le second ouvrant 13 comme illustré à la figure 3.

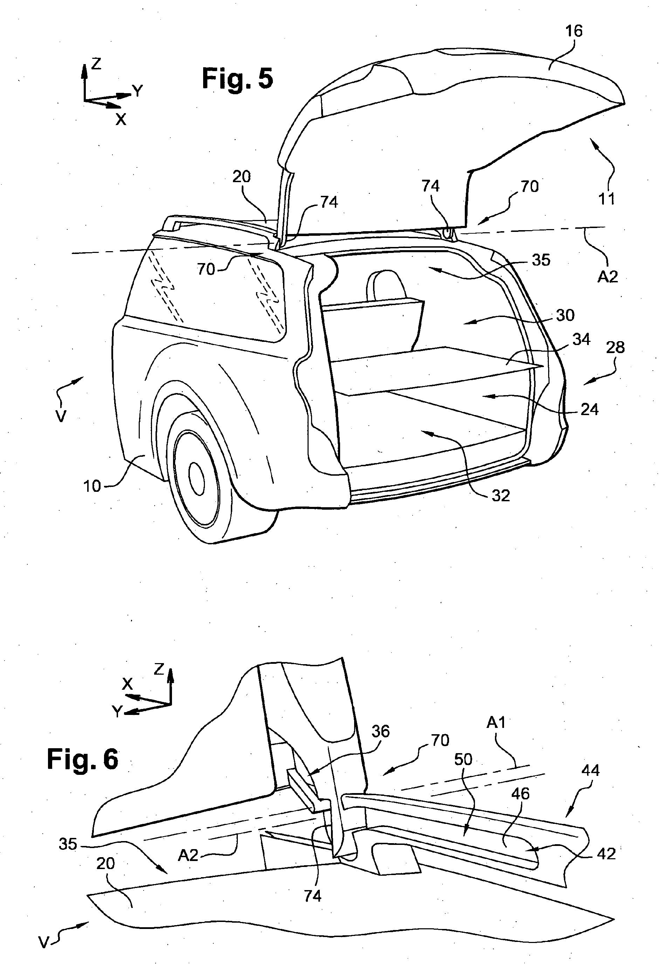

Comme représenté sur les figures 1, 2, 5 et 6, le second hayon 16 est mobile entre :
- une position d'ouverture dans laquelle il libère, au moins en partie un second accès 24 à l'intérieur du véhicule V (figures 5 et 6), et
- une position de fermeture dans laquelle il obture le second accès 24 à l'intérieur du véhicule V (figures 1 et 2).

Le second accès 24 est délimité par une ouverture 26 ménagée dans la caisse 10.

Comme illustré sur les figures 3 et 5, le véhicule comprend un espace de stockage arrière 28 séparé en une partie haute 30 et une partie basse 32 par un organe de séparation 34 sensiblement parallèle au plan XY. L'ouverture 22 donne accès à la partie haute 30 de l'espace de stockage 28 alors que l'ouverture 26 donne accès aux parties haute 30 et basse 32 de l'espace de stockage 28.

Le pavillon 20 comprend une échancrure 35 s'étendant sur toute la largeur du pavillon 20, à partir de l'extrémité arrière du pavillon 20 et en direction de l'arrière du véhicule.

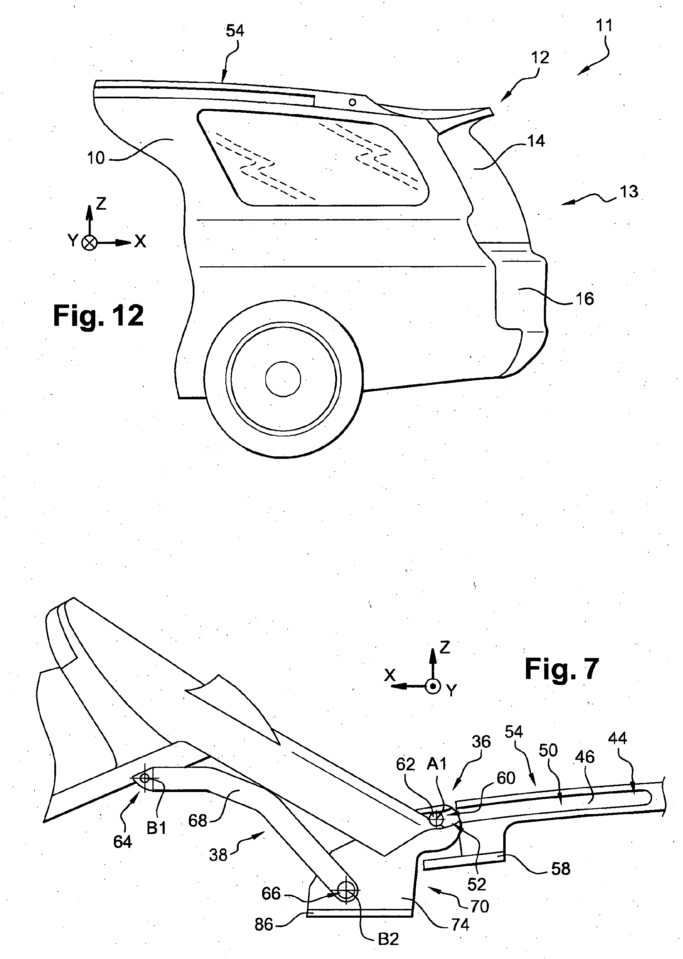

Afin de déplacer le premier hayon 14 entre ses positions d'ouverture et de fermeture, le premier ouvrant 12 comprend des premier et second moyens d'articulation respectivement référencés 36, 38, également illustrés à la figure 7.

Les premiers moyens d'articulation 36 sont aptes à articuler le premier hayon 14 par rapport à la caisse 10.

Les premiers moyens d'articulation 36 sont fixés au premier hayon 14 et comprennent un premier axe principal A1 autour duquel le premier hayon 14 est mobile en rotation. Le premier axe principal A1 est sensiblement parallèle à la direction transversale Y du véhicule.

Comme représenté sur les figures 1 à 6, le premier axe principal A1 est également mobile en translation, selon une direction sensiblement parallèle à la direction longitudinale X du véhicule, par rapport à la caisse 10 entre une position d'ouverture (figure 4) et une position de fermeture (figure 2).

D'une part, la position d'ouverture du premier axe principal A1 correspond à la position d'ouverture du premier hayon 14. Dans cette position d'ouverture de l'axe A1, ce dernier est porté par une partie 42 solidaire rigidement de la caisse 10 et fixe par rapport à la caisse 10 comme illustré sur la figure 4. D'autre part, la position de fermeture du premier axe principal A1 correspond à la position de fermeture du premier hayon 14. Dans cette position de fermeture de l'axe A1, ce dernier est porté par le second ouvrant 13, comme illustré sur la figure 2.

Comme cela est illustré par les figures 1 et 3, la position de fermeture du premier axe principal A1 est la position de l'axe A1 la plus proche de l'arrière du véhicule alors que la position d'ouverture du premier axe principal A1 est la position de l'axe A1 la plus proche de l'avant du véhicule.

En outre, le véhicule V comprend des moyens de guidage 44 du premier axe principal de rotation A1 comme cela est représenté sur les figures 2, 4, 6 et 7.

Ces moyens de guidage 44 comprennent deux glissières 46, 48 aptes à guider le premier axe principal A1 en translation par rapport à la caisse 10 du véhicule V selon une direction sensiblement parallèle à la direction longitudinale X du véhicule V. L'axe principal A1 est apte à se déplacer dans ces glissières 46, 48.

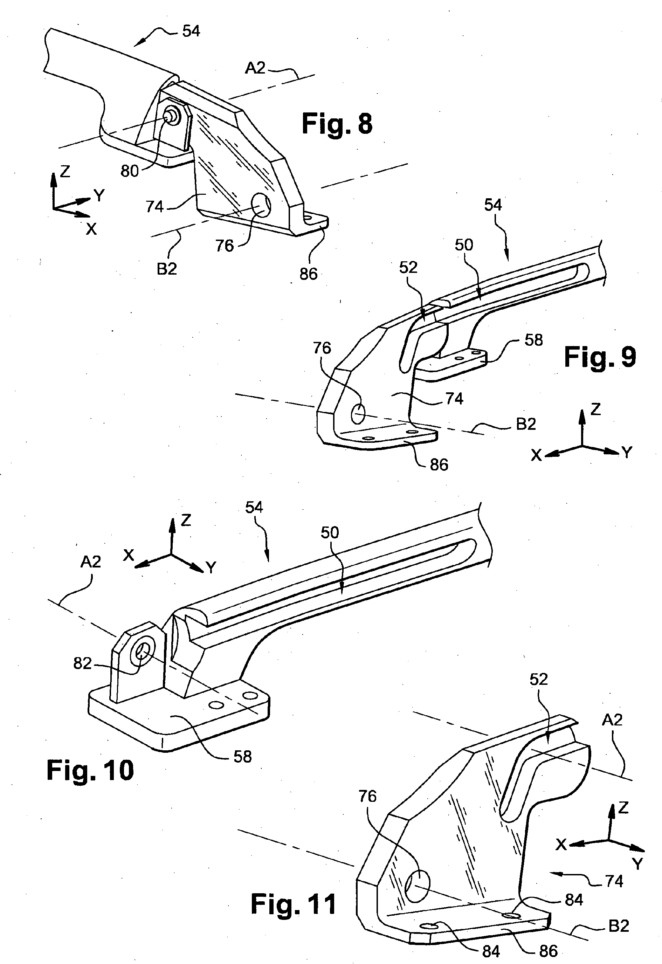

En référence aux figure 2 et 7, chaque glissière 46, 48 comprend des première et deuxième portions 50, 52 mobiles l'une part rapport à l'autre. Les premières portions 50 sont solidaires rigidement de la caisse 10. En l'espèce, chaque première portion 50 est ménagée dans une barre de toit 54, 56 du véhicule. Les deuxièmes portions 52 sont portées par le second ouvrant 13. La barre de toit 56, illustrée sur la figure 10, comprend une platine 58 de fixation de la barre de toit à la caisse 10 du véhicule.

Les premiers moyens d'articulation 36 comprennent deux roulements 60 mobiles, d'une part, autour d'un axe cylindrique 62 matérialisant le premier axe A1 et, d'autre part, dans chaque glissière 46, 48, permettant ainsi le déplacement du premier ouvrant 14 à la fois en rotation et en translation. Ainsi, lorsque les roulement 60 sont guidés par la deuxième portion 52, le premier axe principal A1 est porté par le second ouvrant 13. Lorsque les roulement 60 sont guidés par la première portion 50, le premier axe principal A1 est porté par la partie solidaire de la caisse, ici les barres de toit 54, 56. Le contact entre les roulements 60 et chaque glissière 46, 48 peut alors se faire soit en partie basse soit en partie haute de chaque glissière 46, 48, chaque glissière 46, 48 présentant un jeu par rapport aux roulements 60.

L'échancrure 35 permet le déplacement du premier hayon 14 entre ses positions de fermeture et d'ouverture. En outre, cette échancrure 35 facilite l'accès à l'intérieur du véhicule V, notamment pour les personnes de grande taille.

En outre, les seconds moyens d'articulation 38 sont mobiles en rotation par rapport aux premier 14 et second 16 hayons, respectivement autour de premier et second axes B1, B2 secondaires de rotation des seconds moyens d'articulation 38 du premier hayon 14. Les axes secondaires B1, B2 sont sensiblement parallèles entre eux et à la direction Y transversale du véhicule. Comme illustré sur la figure 7, les seconds moyens d'articulation 38 du premier ouvrant 14 sont fixés au premier hayon 14 et à un organe d'articulation 74 du second ouvrant 13. Les seconds moyens d'articulation 38 sont fixés aux premier et second hayons 14, 16 grâce à des liaisons pivots 64, 66 matérialisant des premier et second axes secondaires B1, B2. Sur les figures 1 à 7, les seconds moyens d'articulation 38 comprennent deux biellettes rigides 68 disposées symétriquement l'une par rapport à l'autre, de part et d'autre d'un plan médian du véhicule V sensiblement parallèle au plan XZ.

Le second ouvrant 13 comprend des moyens d'articulation 70 du second hayon 16. Le second hayon 16 est mobile, en rotation, entre ses positions d'ouverture et de fermeture autour d'un second axe principal A2 de rotation des moyens d'articulation 70. Le second axe principal A2 est fixe par rapport à la caisse 10 du véhicule et est sensiblement parallèle à la direction transversale Y du véhicule.

En référence aux figures 7, 8, 9 et 11, les moyens d'articulation 70 comprennent l'organe d'articulation 74 rapporté rigidement au second hayon 16 et fixe par rapport à ce second hayon 16. L'organe 74 comporte d'une part, un orifice 76 apte à recevoir la liaison pivot 66 matérialisant le second axe secondaire B2 d'articulation et, d'autre part, un axe cylindrique 80 matérialisant le second axe principal de rotation A2 et apte à être reçue dans un orifice de rotation 82 ménagé dans chaque barre de toit 54, 56 comme cela est représenté aux figures 8 et 10. De plus, l'organe d'articulation 74 est fixé au second hayon 16 grâce à des moyens de fixations, par exemple des vis traversant les orifices 84 ménagés dans une platine 86 de l'organe 74. Enfin, la deuxième portion 52 de chaque glissière 46, 48 est ménagée dans cet organe d'articulation 74.

Afin de rendre l'utilisation du premier hayon 14 plus ergonomique, le premier ouvrant 12 comprend des moyens motorisés (non représentés) aptes à générer un couple autour du second axe secondaire de rotation B2 des seconds moyens d'articulation 38 du premier hayon 14. En l'espèce, les moyens motorisés comprennent des moyens de déplacement (non représentés) en translation du premier axe principal A1 de rotation, par exemple des moyens de traction du premier axe principal A1.

Dans l'exemple illustré, le second ouvrant 13 comprend moyens motorisés (non représentés) aptes à générer un couple autour du second axe principal de rotation A2 et permettant de déplacer le second hayon 16 entre ses positions d'ouverture et de fermeture.

En référence aux figures 2 et 6, les première et deuxième portions 50 et 52 sont dans le prolongement l'une de l'autre de façon que le premier axe principal A1 n'est mobile entre les première et deuxième portions 50 et 52 que dans la seule position de fermeture du second hayon 16. En effet, l'organe d'articulation 74 est mobile entre :
- une position d'immobilisation du premier hayon 14 correspondant à une position d'ouverture du second hayon 16, et
- une position de déplacement du premier hayon 14 correspondant à une position de fermeture du second hayon 16.

Ainsi, lorsque le second hayon 16 est dans une position autre que celle de fermeture, chaque première et deuxième portion 50 et 52 ne forme pas le prolongement de l'autre si bien que le premier hayon 14 est immobilisé dans la deuxième portion 52 de l'organe d'articulation 74.

En outre, comme le premier axe principal A1 est porté par le second ouvrant 13 dans la position de fermeture du premier hayon 14, le déplacement du second hayon 16, entre ses positions de fermeture et d'ouverture, entraîne le déplacement du premier hayon 14. Dans l'exemple illustré, les moyens motorisés du second ouvrant 13 sont désactivés dans la position d'ouverture du premier hayon 14. A l'inverse, les moyens motorisés du second ouvrant 13 sont activés dans la position de fermeture du premier hayon 14. L'activation et la désactivation des moyens motorisés du second ouvrant 13 sont réalisées grâce à des moyens électriques de commande de l'ensemble 11.

On a représenté sur les figures 12 à 16 un ensemble d'ouvrants selon un deuxième mode de réalisation. Sur ces figures, les éléments analogues à ceux représentés sur les figures précédentes sont désignés par des références identiques.

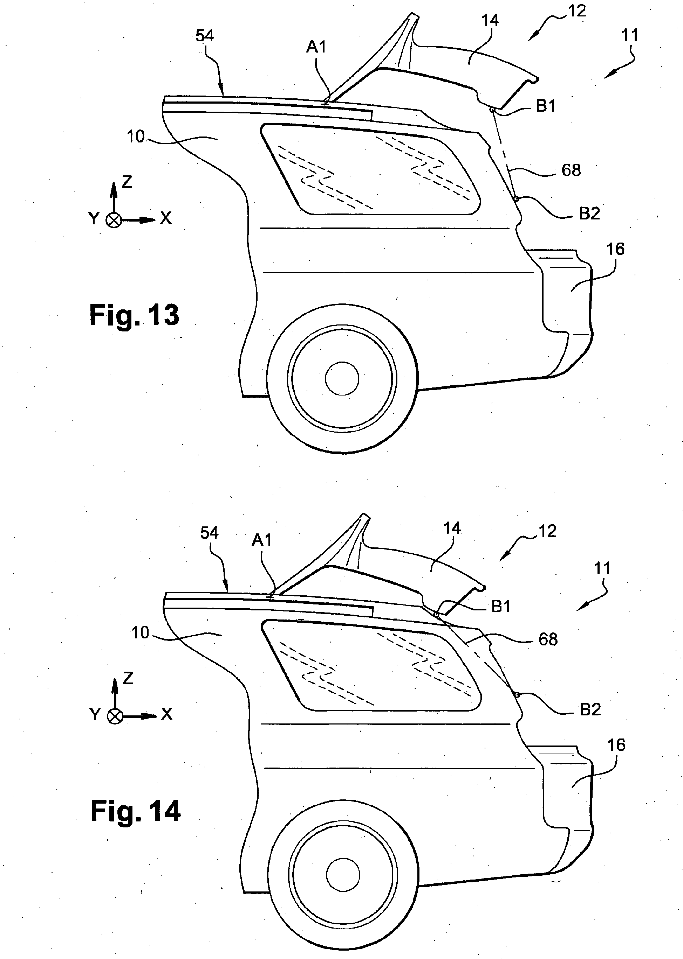

Comme représenté sur les figures 13 et 14, les deux biellettes rigides 68 sont fixées sur les premier et second ouvrants 14, 16 sur des parties différentes de celles du premier mode de réalisation. En conséquence, la trajectoire du premier hayon 14 du second mode de réalisation est différente de celle du premier hayon 14 du premier mode de réalisation.

De plus, le second hayon 16 comprend des seconds moyens d'articulation 90, en l'espèce deux équilibreurs pneumatiques 92, fixés à la caisse du véhicule et au second hayon 16 au moyen de rotules d'articulation 94 et disposés symétriquement l'un par rapport à l'autre, de part et d'autre d'un plan médian sensiblement parallèle au plan XZ.

L'invention ne se limite pas aux modes de réalisation précédemment décrits.

L'ensemble 11 pourra se trouver sous la forme d'un kit. Dans ce kit, le premier hayon 14 est apte à être mobile en rotation, par rapport à la caisse 10, autour de l'axe principal A1. L'axe principal A1 est apte à se déplacer dans les glissières 46, 48 entre une première position correspondant à la position d'ouverture du premier hayon 14, et une seconde position correspondant à la position de fermeture du premier hayon 14.

Ce kit comprend également les barres de toit 54, 56 formant les glissières 46, 48.

En effet, les seconds moyens d'articulation pourront comprendre des équilibreurs pneumatiques en remplacement de la biellette rigide.

De plus, on notera que les caractéristiques de l'ouvrant 12, de l'ensemble d'ouvrants 11 et des barres de toit 54, 56 décrits ci-dessus peuvent être mises en oeuvres indépendamment les unes des autres et indépendamment du fait l'ouvrant comprend une glissière de guidage de l'axe principal de rotation du hayon apte à guider l'axe principal de rotation en translation par rapport à la caisse du véhicule, selon une direction sensiblement parallèle à la direction longitudinale du véhicule.

On pourra notamment prévoir, indépendamment des autres caractéristiques, un ouvrant arrière pour véhicule automobile, l'ouvrant comprenant un hayon, l'ouvrant comprenant des moyens d'articulation du hayon par rapport à la caisse du véhicule automobile, fixés au hayon, le hayon étant mobile en rotation, par rapport à la caisse, autour d'un axe principal de rotation des moyens d'articulation, l'axe principal se déplaçant dans au moins une glissière de guidage de l'axe principal de rotation en translation par rapport à la caisse, selon une direction sensiblement parallèle à la direction longitudinale du véhicule, entre :
- une position d'ouverture correspondant à une position d'ouverture du hayon dans laquelle le hayon libère, au moins en partie, un accès à l'intérieur du véhicule et est, au moins en partie, superposé sur un pavillon du véhicule, et
- une position de fermeture correspondant à une position de fermeture du hayon dans laquelle le hayon obture l'accès à l'intérieur du véhicule.

## Revendications

1. Ensemble (11) de premier (12) et second (13) ouvrants arrières pour véhicule automobile, les premier et second ouvrants comprenant respectivement des premier (14) et second (16) hayons, le second ouvrant (13) portant le premier hayon (14), **caractérisé en ce que** le premier ouvrant (12) comprend des moyens d'articulation (36) du premier hayon par rapport à une caisse (10) d'un véhicule, fixés au premier hayon (14), le premier hayon étant mobile en rotation, par rapport à la caisse (10), autour d'un axe principal (A1) de rotation des moyens d'articulation (36), l'axe principal se déplaçant dans au moins une glissière (46, 48) de guidage de l'axe principal en translation par rapport à la caisse (10), selon une direction sensiblement parallèle à la direction longitudinale (X) du véhicule entre :
- une position d'ouverture correspondant à une position d'ouverture du premier hayon (14) dans laquelle le hayon (14) libère, au moins en partie, un accès à l'intérieur du véhicule et est, au moins en partie, superposé sur un pavillon (20) du véhicule, et
- une position de fermeture correspondant à une position de fermeture du premier hayon (14) dans laquelle le premier hayon (14) obture l'accès à l'intérieur du véhicule.

2. Ensemble (11) selon la revendication 1, dans lequel l'accès libéré (18) par le premier hayon dans sa position d'ouverture est délimité par une ouverture (22) ménagée dans le second ouvrant (13).

3. Ensemble (11) selon la revendication 1 ou 2, dans lequel, les moyens d'articulation (36) du premier hayon (14) par rapport à la caisse étant des premiers moyens d'articulation, le premier ouvrant (12) comprend des seconds moyens d'articulation (38) du premier hayon et du second ouvrant, entre eux, fixés au premier hayon (14) et au second ouvrant, les seconds moyens d'articulation (38) étant mobiles en rotation, par rapport au premier hayon (14) et au second ouvrant, respectivement autour de premier (B1) et second (B2) axes secondaires de rotation des seconds moyens d'articulation (38).

4. Ensemble (11) selon la revendication 3, comprenant des moyens motorisés aptes à générer un couple autour du second axe secondaire de rotation (B2) des seconds moyens d'articulation (38).

5. Ensemble (11) selon la revendication 4, dans lequel les moyens motorisés comprennent des moyens de transmission du couple au second axe secondaire de rotation (B2).

6. Ensemble (11) selon la revendication 4, dans lequel les moyens motorisés comprennent des moyens de déplacement en translation, par exemple des moyens de traction de l'axe principal de rotation (A1).

7. Ensemble (11) selon l'une quelconque des revendications précédentes, dans lequel, l'accès libéré par le premier hayon étant un premier accès et l'axe principal de rotation du premier hayon étant un premier axe principal, le second hayon (16) est mobile en rotation, par rapport à la caisse (10) du véhicule, autour d'un second axe principal de rotation (A2), fixe par rapport à la caisse (10) du véhicule, entre une position d'ouverture dans laquelle il libère, au moins en partie un second accès à l'intérieur du véhicule délimité par une ouverture (26) ménagée dans la caisse (10), et une position de fermeture dans laquelle il obture le second accès à l'intérieur du véhicule.

8. Ensemble (11) selon l'une quelconque des revendications précédentes, dans lequel au moins une portion (50) de la glissière de guidage (46) est ménagée dans une barre de toit (54, 56) du véhicule.

9. Ensemble (11) selon l'une quelconque des revendications précédentes, dans lequel la glissière (46, 48) comprend:
- une portion (50) solidaire rigidement de la caisse du véhicule, et
- une portion (52) portée par le second ouvrant (13).

10. Véhicule automobile (V), **caractérisé en ce qu'**il comprend un ensemble (11) selon l'une quelconque des revendications précédentes.

11. Kit de premier (12) et second (13) ouvrants arrières pour véhicule automobile, les premier et second ouvrants comprenant respectivement des premier (14) et second (16) hayons, le second ouvrant (13) portant le premier hayon (14), **caractérisé en ce que** le premier ouvrant (12) comprend des moyens d'articulation (36) du premier hayon par rapport à une caisse (10) d'un véhicule, fixés au premier hayon (14), le premier hayon étant mobile en rotation, par rapport à la caisse (10), autour d'un axe principal (A1) de rotation des moyens d'articulation (36), le kit comprenant également au moins une glissière de guidage de l'axe principal pour le déplacement de l'axe principal en translation par rapport à la caisse (10), selon une direction sensiblement parallèle à la direction longitudinale (X) du véhicule entre :
- une première position de l'axe principal correspondant à une position d'ouverture du premier hayon (14) dans laquelle le premier hayon (14) libère, au moins en partie, un accès à l'intérieur du véhicule et est, au moins en partie, superposé sur un pavillon du véhicule, et
- une seconde position de l'axe principal correspondant à une position de fermeture du premier hayon (14) dans laquelle le premier hayon (14) obture l'accès à l'intérieur du véhicule.

12. Kit selon la revendication 11, comprenant au moins une barre de toit (54, 56) formant la glissière ou l'une des glissières.

## Patentansprüche

1. Baugruppe (11) aus einem ersten (12) und einem zweiten (13) Hecköffnungselement für Kraftfahrzeug, wobei das erste und das zweite Öffnungselement jeweils eine erste (14) und eine zweite (16) Heckklappe aufweisen, wobei das zweite Öffnungselement (13) die erste Heckklappe (14) trägt, **dadurch gekennzeichnet, dass** das erste Öffnungselement (12) Anlenkmittel (36) der ersten Heckklappe in Bezug auf eine Karosserie (10) eines Fahrzeugs aufweist, die an der ersten Heckklappe (14) befestigt sind, wobei die erste Heckklappe in Bezug auf die Karosserie (10) um eine Hauptrotationsachse (A1) der Anlenkmittel (36) in Drehung beweglich ist, wobei sich die Hauptrotationsachse in mindestens einer Gleitführung (46, 48) der Hauptrotationsachse in Verschiebung in Bezug auf die Karosserie (10) entlang einer Richtung im Wesentlichen parallel zu der Längsrichtung (X) des Fahrzeugs verlagert zwischen:
- einer Öffnungsposition, die einer Öffnungsposition der ersten Heckklappe (14) entspricht, in der die Heckklappe (14) einen Zugang zu dem Inneren des Fahrzeugs freigibt und mindestens teilweise auf einem Himmel (20) des Fahrzeugs überlagert ist, und
- einer Schließposition, die einer Schließposition der ersten Heckklappe (14) entspricht, in der die erste Heckklappe (14) den Zugang zum Inneren des Fahrzeugs verschließt.

2. Baugruppe (11) nach Anspruch 1, bei der der durch die erste Heckklappe in ihrer Öffnungsposition freigegebene Zugang (18) von einer Öffnung (22), die in dem zweiten Öffnungselement (13) eingerichtet ist, abgegrenzt ist.

3. Baugruppe (11) nach Anspruch 1 oder 2, bei der die Anlenkmittel (36) der ersten Heckklappe (14) in Bezug auf die Karosserie erste Anlenkmittel sind, wobei das erste Öffnungselement (12) zweite Anlenkmittel (38) der ersten Heckklappe und des zweiten Öffnungselements untereinander aufweist, die an der ersten Heckklappe (14) und an dem zweiten Öffnungselement befestigt sind, wobei die zweiten Anlenkmittel (38) in Bezug auf die erste Heckklappe (14) und auf das zweite Öffnungselement jeweils um eine erste (B1) und eine zweite (B2) Nebenrotationsachse der zweiten Anlenkmittel (38) in Drehung beweglich sind.

4. Baugruppe (11) nach Anspruch 3, die motorisierte Mittel aufweist, die geeignet sind, um ein Drehmoment um die zweite Nebenrotationsachse (B2) der zweiten Anlenkmittel (38) zu erzeugen.

5. Baugruppe (11) nach Anspruch 4, bei der die motorisierten Mittel Übertragungsmittel des Drehmoments auf die zweite Nebenrotationsachse (B2) aufweisen.

6. Baugruppe (11) nach Anspruch 4, bei der die motorisierten Mittel Mittel zum Bewegen in Verschiebung aufweisen, zum Beispiel Zugmittel der Hauptrotationsachse (A1).

7. Baugruppe (11) nach einem der vorhergehenden Ansprüche, bei der der von der ersten Heckklappe freigegebene Zugang ein erster Zugang ist und die Hauptrotationsachse der ersten Heckklappe eine erste Hauptachse ist, wobei die zweite Heckklappe (16) in Bezug auf die Karosserie (10) des Fahrzeugs um eine zweite Hauptrotationsachse (A2), die in Bezug auf die Karosserie (10) des Fahrzeugs stationär ist, zwischen einer Öffnungsposition, in der sie einen zweiten Zugang zum Inneren des Fahrzeugs, der von einer Öffnung (26), die in der Karosserie (10) abgegrenzt ist, mindestens teilweise freigibt, und einer Schließposition, in der sie den zweiten Zugang zu Inneren des Fahrzeugs verschließt, in Drehung beweglich ist.

8. Baugruppe (11) nach einem der vorhergehenden Ansprüche, bei der mindestens ein Abschnitt (50) der Gleitführung (46) in einer Dachgepäckträgerstange (54, 56) des Fahrzeugs eingerichtet ist.

9. Baugruppe (11) nach einem der vorhergehenden Ansprüche, bei der die Gleitführung (46, 48) Folgendes aufweist:
- einen Abschnitt (50), der starr mit der Karosserie des Fahrzeugs verbunden ist, und
- einen Abschnitt (52), der von dem zweiten Öffnungselement (13) getragen wird.

10. Kraftfahrzeug (V), **dadurch gekennzeichnet, dass** es eine Baugruppe (11) nach einem der vorhergehenden Ansprüche aufweist.

11. Bausatz eines ersten (12) und zweiten (13) hinteren Öffnungselements für Kraftfahrzeug, wobei das erste und das zweite Öffnungselement jeweils erste (14) und zweite (16) Heckklappen aufweisen, wobei das zweite Öffnungselement (13) die erste Heckklappe (14) trägt, **dadurch gekennzeichnet, dass** das erste Öffnungselement (12) Anlenkmittel (36) der ersten Heckklappe in Bezug auf eine Karosserie (10) eines Fahrzeugs aufweist, die an der ersten Heckklappe (14) befestigt sind, wobei die erste Heckklappe in Bezug auf die Karosserie (10) um eine Hauptrotationsachse (A1) der Anlenkmittel (36) in Drehung beweglich ist, wobei der Bausatz auch mindestens eine Gleitführung der Hauptachse für die Belegung der Hauptachse in Verschiebung in Bezug auf die Karosserie (10) entlang einer Richtung, die im Wesentlichen zu der Längsrichtung (X) des Fahrzeugs parallel ist, aufweist, zwischen:
- einer ersten Position der Hauptachse, die einer Öffnungsposition der ersten Heckklappe (14) entspricht, in der die erste Heckklappe (14) einen Zugang zum Inneren des Fahrzeugs mindestens teilweise freigibt und mindestens teilweise auf einem Himmel des Fahrzeugs überlagert ist,
- einer zweiten Position der Hauptachse, die einer Schließposition der ersten Heckklappe (14) entspricht, in der die erste Heckklappe (14) den Zugang zum Inneren des Fahrzeugs verschließt.

12. Bausatz nach Anspruch 11, der mindestens eine Dachgepäckträgerstange (54, 56), die die Gleitführung oder eine der Gleitführungen bildet, aufweist.

## Claims

1. A unit (11) of first and second rear doors (12 and 13) for a motor vehicle, the first and second doors respectively comprising first and second tailgates (14 and 16), the second door (13) carrying the first tailgate (14), the unit being **characterized in that** the first door (12) includes hinge means (36) for hinging the first tailgate relative to a vehicle body (10), said means being fastened to the first tailgate (14), the first tailgate being pivotally movable relative to the body (10) about a main pivot axis (A1) of the hinge means (36), the main axis being suitable for moving in at least one guide slideway (46, 48) for guiding the main axis in translation relative to the body (10) in a direction that is substantially parallel to the longitudinal direction (X) of the vehicle, between:
an open position corresponding to an open position of the first tailgate (14), in which the tailgate (14) uncovers at least part of an access to the inside of the vehicle and is superposed, at least in part, on a roof of the vehicle; and
· a closed position corresponding to a closed position of the first tailgate (14), in which the first tailgate (14) shuts the access to the inside of the vehicle.

2. A unit (11) according to claim 1, wherein the access (18) uncovered by the first tailgate in its open position is defined by an opening (22) formed in the second door (13).

3. A unit (11) according to claim 1 or claim 2, wherein, with the hinge means (36) for hinging the first tailgate (14) relative to the body being first hinge means, the first door (12) includes second hinge means (38) for hinging the first tailgate and the second door relative to each other, the second hinge means being fastened to the first tailgate (14) and to the second door, the second hinge means (38) being pivotally movable relative to the first tailgate (14) and to the second door respectively about first and second secondary pivot axes (B1 and B2) of the second hinge means (38).

4. A unit (11) according to claim 3, including motor-driven means suitable for generating torque about the second secondary pivot axis (B2) of the second hinge means (38).

5. A unit (11) according to claim 4, wherein the motor-driven means include means for transmitting torque to the second secondary pivot axis (B2).

6. A unit (11) according to claim 4, wherein the motor-driven means include means for movement in translation, e.g. means for applying traction to the main pivot axis (A1).

7. A unit (11) according to any preceding claim, wherein, with the access uncovered by the first tailgate being a first access and the main pivot axis of the first tailgate being a first main axis, the second tailgate (16) is pivotally movable relative to the body (10) of the vehicle about a second main pivot axis (A2) that is stationary relative to the body (10) of the vehicle, between an open position in which it uncovers at least part of a second access to the inside of the vehicle defined by an opening (26) formed in the body (10), and a closed position in which it shuts the second access to the inside of the vehicle.

8. A unit (11) according to any preceding claim, wherein at least a portion (50) of the guide slideway (56) is formed in a roof bar (54, 56) of the vehicle.

9. A unit (11) according to any preceding claim, wherein the slideway (46, 48) comprises:
· a portion (50) that is rigidly secured to the body of the vehicle; and
a portion (52) that is carried by the second door (13).

10. A motor vehicle (V), **characterized in that** it includes a unit (11) of doors according to any preceding claim.

11. A kit comprising first and second rear doors (12 and 13) for a motor vehicle, the first and second doors comprising respective first and second tailgates (14 and 16), the second door (13) being suitable for carrying the first tailgate (14), the kit being **characterized in that** the first door (12) includes hinge means (36) for hinging the first tailgate relative to a vehicle body (10), which means are fastened to the first tailgate (14), the first tailgate being pivotally movable relative to the body (10) about a main pivot axis (A1) of the hinge means (36), the kit also including at least one guide slideway for guiding the main axis in order to move the main axis in translation relative to the body (10) in a direction that is substantially parallel to the longitudinal direction (X) of the vehicle, between:
· a first position of the main axis corresponding to a first position of the first tailgate (14); and
· a second position of the main axis corresponding to a second position of the first tailgate (14).

12. A kit according to claim 11, including at least one roof bar (54, 56) forming the slideway or one of the slideways.
